Europäisches Patentamt

European Patent Office

Office européen des brevets

(11) Publication number: **0 405 149 A2**

# EUROPEAN PATENT APPLICATION

(21) Application number: 90110076.8

(22) Date of filing: 28.05.90

(51) Int. Cl.5: **F24F 11/00**

(30) Priority: 29.06.89 JP 167253/89

(43) Date of publication of application:
**02.01.91 Bulletin 91/01**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Fujii, Satoki**
**Omron Nomura Dormitory, 67 Nomura Cho**
**Kasatsu City, Shiga Prefecture(JP)**

(74) Representative: **Kahler, Kurt**
**Patentanwalt Dipl.-Ing. Kurt Kahler**
**Gerberstrasse 3 Postfach 1249**
**D-8948 Mindelheim(DE)**

(54) **Room condition maintaining apparatus.**

㉗ A room condition maintaining apparatus according to this invention comprises surrounding detectors (1 to 6) for detecting room temperature, humidity, and air quality; outdoor temperature, humidity, and lighting; and differences between the temperatures and humidities are detected. When the above data is collected, the data is input to a fuzzy controller (9) which operates on the basis of fuzzy reasoning to determine output levels for an air regulator (10), a humidity regulator (11), a lighting apparatus (12), and a fan (13). By continually adjusting the above output levels, a room is made more comfortable for anyone entering from outdoors.

FIG. I

# ROOM CONDITION MAINTAINING APPARATUS

## BACKGROUND:

### Field of the Invention:

This invention relates to a room condition maintaining apparatus. More specifically, this invention relates to an apparatus utilizing membership functions, the roots of fuzzy logic that were developed by Lofti Zadeh circa 1965, to regulate temperature, humidity, lighting, and air quality of a room. A membership function represents a set with indistinct boundaries, hence the term "fuzzy". Fuzzy sets differ from crisp, Boolean type logic in that, as opposed to the latter, a fuzzy set allows for shades of grey. Accordingly, each element of a membership function is given a grade which is a percentage of how definitely the element fits into the fuzzy set.

A fuzzy rule is expressed in the following form:

If $(x1 = A$ and $x2 = B...)$ then $(y = Z)$

The "If" clause is called the antecedent and the "then" clause is called the consequent. Furthermore, each "x" represents an input variable and "y" represents an output variable. Each capital letter represents a fuzzy label which can be represented by a membership function. Finally, each "=" pairing, for example $(x1 = A)$, represents a fuzzy term which can be applied to a specific part of a graph of a membership function.

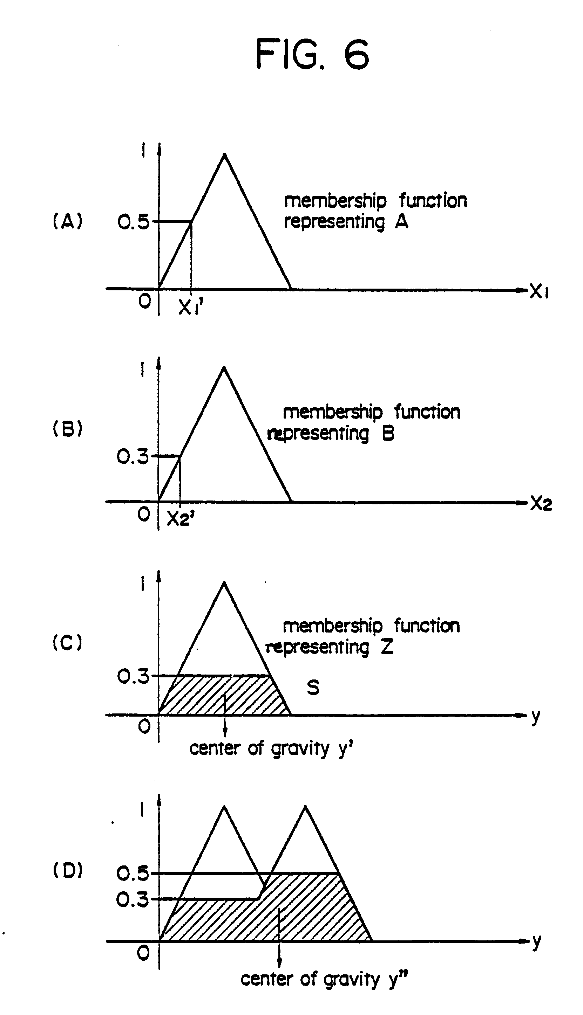

**Fig. 6** shows how membership functions for each variable can be logically combined to produce an output member function for a fuzzy rule and, moreover, how to combine fuzzy rule output membership functions to achieve one defuzzified result. As can be seen, **Figs. 6(A) and 6 (B)** represent membership functions wherein x1 and x2, the horizontal axis, indicate variables and A and B are membership functions representing fuzzy labels. Furthermore, the vertical axis value at the point of intersection of the fuzzy label membership function and the variable values, $x1'$ and $x2'$, represent a grade of membership. Thus, in **Fig. 6(A)**, 0.5 represents the first term's grade in the antecedent of the first rule. In **Fig. 6(B)**, 0.3 represents the second term's grade in the antecedent of the first rule.

**Fig. 6(C)** illustrates the manner in which the antecedent terms are combined to form the consequent. Since the antecedent terms are connected by an "and", their combined graph must be an intersection of the two. This process is referred to as a minimum function corresponding to a mini/max rule. When combining "or"s as in combining consequents, a maximum function applies and the result will not be an intersection of the membership functions but will represent the entire area of the membership functions. Therefore, since the mini rule applies in **Fig. 6(C)**, the output membership function is truncated at the minimum membership grade value, 0.3, of the two input functions. The mesa portion, indicated by "S", is the result and represents all the membership grade values of the variable common to both antecedent terms. Furthermore, $y'$ is located at the center of gravity of the shaded mesa portion "S" and indicates the final inference determined by the fuzzy rule. In this case, there are only two terms in the antecedent. However, when more terms comprise an antecedent, the combination process is the same.

When, as is usually the case, more than one rule applies to a problem, the above-described process is used to determine the result for each fuzzy rule. However, as shown in **Fig. 6(D)**, each result is not minimized as in the case of combining antecedent terms connected by "and"s but maximized because rules are theoretically connected by "or"s; they are different rules concerning the same phenomenon. Thus, in **Fig. 6(D)**, two mesa portions from two rules are combined according to the max rule and the combined center of gravity is obtained at point $y''$. In this manner, the final consequent determination is obtained.

### Related Art:

It has been known in prior art to put a temperature sensing means in a room to detect temperature. According to a temperature sensed, an air conditioning unit is directed to heat or cool the room in order to maintain a constant room temperature. However, for the purpose of maintaining a comfortable environment inside a room, this invention has several drawbacks. First, outside temperature is not taken into consideration when setting the predetermined room temperature. Secondly, other factors besides temperature influence room condition. The prior art doesn't even address such factors as humidity, lighting, and air quality. All these stimuli affect room condition and should be taken into consideration in order to make a room comfortable.

## SUMMARY:

It is therefore an object of this invention to provide an apparatus that uses fuzzy reasoning to adjust room temperature in accordance with outside temperature. This object is accomplished in part by employing two temperature sensors; one inside a room to be conditioned and one outside to determine the outdoor temperature.

Another object of this invention is to provide a room conditioning apparatus that considers many factors affecting the comfort of anyone in the room. This goal is realized by providing, in addition to an air conditioner, a humidity controller, a light level adjuster, and a fan for improving air quality. Thus, besides the two temperature sensors, an apparatus according to this invention utilizes two outdoor humidity detectors,one for the room and one for outdoors, and an outdoor light detector. Furthermore, an air quality sensor determines air quality by determining a difference in the intensity of light emitted from a light level adjuster and the intensity of light detected by a photoelectric sensor. For example, light emitted in a smoky room would lose some brightness as it is absorbed by the smoke.

A basic idea of this invention is to provide a room conditioning apparatus that utilizes fuzzy reasoning to achieve a maximum room comfort level at all times. Such a fuzzy reasoning device can compare many different combinations of changing input factors to adjust output levels accordingly. Specifically, the above objects are realized by providing a room condition maintaining apparatus comprising surroundings detecting devices to detect temperature, humidity, and air quality inside a room as well as outdoor temperature, humidity, and light; and a fuzzy controller operating on the basis of fuzzy reasoning, wherein the fuzzy controller's input is the output from the surroundings detecting devices and the fuzzy controller's output controls an air regulator, light level, and a fan.

Other objects and advantages of this invention will become apparent from the following description and accompanying drawings.

**BRIEF DESCRIPTION OF THE DRAWINGS:**

**Fig. 1** shows an embodiment of the room condition maintaining apparatus according to this invention.
**Fig. 2** is a block diagram of a fuzzy controller of this invention.
**Fig. 3** shows a fuzzy operating means of the fuzzy controller.
**Fig. 4** shows a defuzzifier with different input signals.
**Fig. 5** shows examples of different membership functions used by the fuzzy controller.
**Fig. 6** comprises membership functions for explaining conventional fuzzy reasoning.

**DESCRIPTION OF THE PREFERRED EMBODIMENT:**

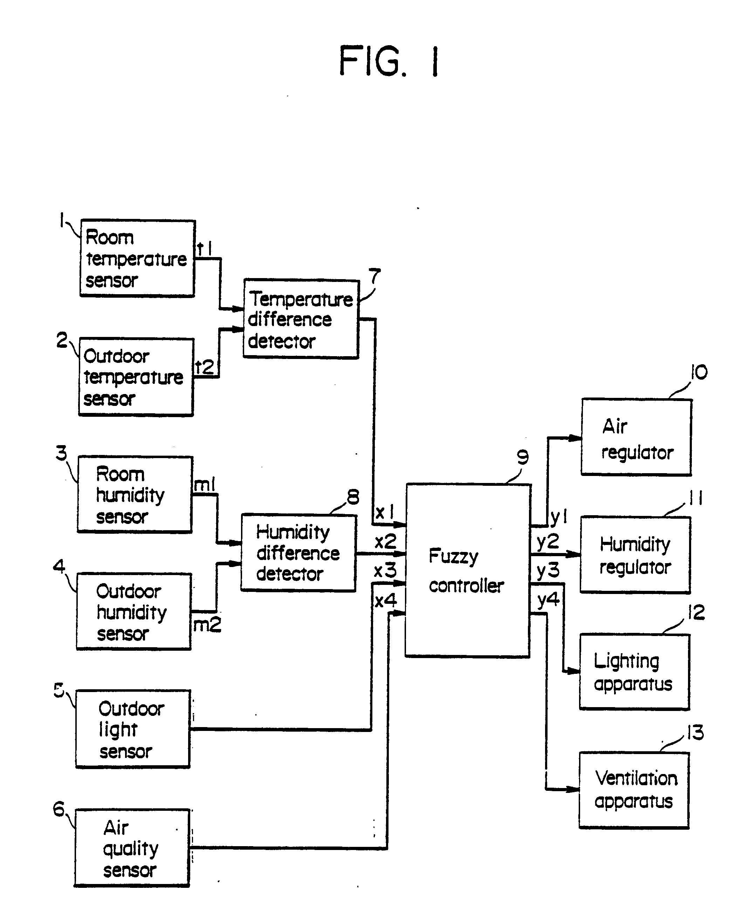

As shown in **Fig. 1**, the room condition maintaining apparatus according to this invention has a room temperature sensor **1**, a room humidity sensor **3**, and a air quality sensor **6**, wherein the air quality sensor **6** detects permeation of light through air in the room. The higher the permeation detected by the air quality sensor **6**, which could be a photoelectric sensor, the cleaner the air in the room. Additionally provided are an outdoor temperature sensor **2**, an outdoor humidity sensor **4**, and an outdoor light sensor **5**.

The temperatures detected by the room temperature sensor **1** and the outdoor temperature sensor **2** are output [t1 and t2] to a temperature difference detector **7** which detects the difference between the temperatures and outputs its result [x1] to a fuzzy controller **9**. Similarly, the humidities detected [m1 and m2] by the room humidity sensor **3** and the outdoor humidity senor **4** are input to a humidity difference detector **8** and the difference [x2] is then output to the fuzzy controller **9**. In addition, the outdoor light sensor **5** detects outdoor light and inputs the value [x3] to the fuzzy controller **9**. Finally, the air quality sensor **6** determines the permeation of light through air in the room and also inputs the result [x4] to the fuzzy controller **9**.

Once the sensor outputs [x1, x2, x3, and x4] are input to the fuzzy controller **9**, the fuzzy controller **9** performs fuzzy reasoning. When the fuzzy controller **9** completes the fuzzy reasoning process, it outputs control values [y1, y2, y3 and y4] to an air regulator **10**, humidity regulator **11**, lighting apparatus **12**, and a ventilation apparatus **13** respectively.

The air regulator **10** maintains the predetermined temperature in the room according to the fuzzy controller **9** output value y1, which is the output variable regarding predetermined temperature. Similarly, the humidity regulator **11** maintains the predetermined humidity in the room according to the fuzzy controller **9** output value y2, which is the output variable regarding predetermined humidity. The lighting apparatus **12** and the ventilation apparatus **13** are similarly regulated by output variable values y3 and y4, wherein y3 is an output variable value for light and y4 is the output variable value regarding air quality.

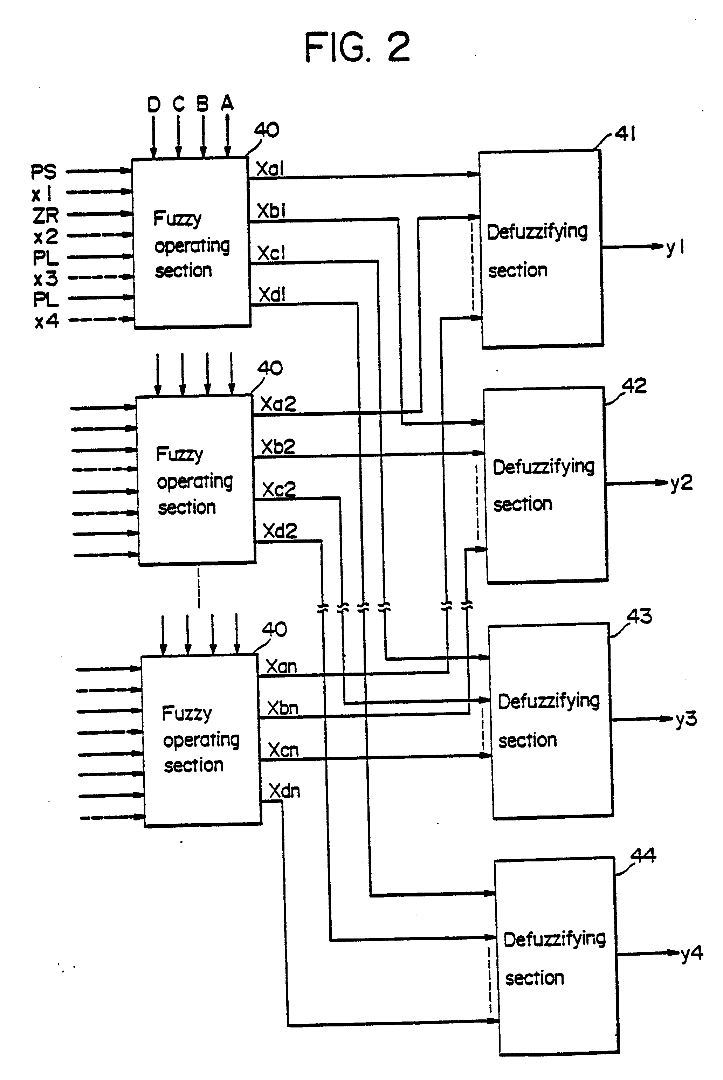

Provided for a better understanding of how the output variable values are derived from the sensor inputs is **Fig. 2**, a block diagram of the fuzzy controller **9**. Moreover, the fuzzy controller **9** is substantially comprised of a fuzzy operating section **40** and defuzzifying sections **41, 42, 43, 44** for defuzzifying each output variable value. First, the fuzzy operating section **40** outputs Xa1, Xb1, Xc1 and Xd1 according to fuzzy rules, wherein all the fuzzy rules are stored in the fuzzy operating section **40**.

Following are three examples of fuzzy rules stored in the fuzzy operating section **40**:

if (x1 = PS and x2 = ZR and x3 = PL and x4 = PL) then (y1 = PS and y2 = ZR and y3 = PL and y4 = ZR) [Rule 1]

if (x1 = PM and x2 = PM and x3 = PS and x4 = PS) then (y1 = PL and y2 = PM and y3 = PS and y4 = PM) [Rule 2]

if (x1 = NS and x2 = NL and x3 = PS and x4 = PS) then (y1 = NS and y2 = ZR and y3 = PS and y4 = PL) [Rule 3]

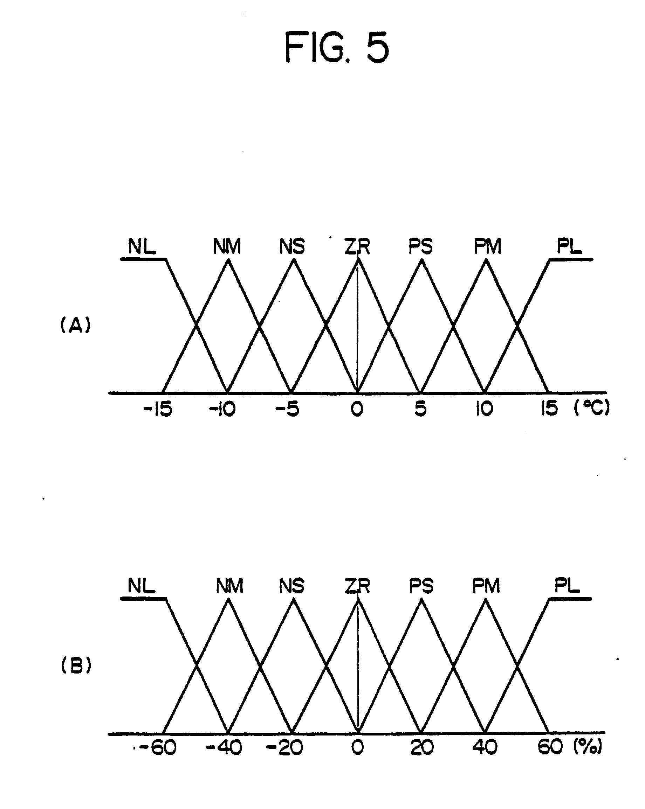

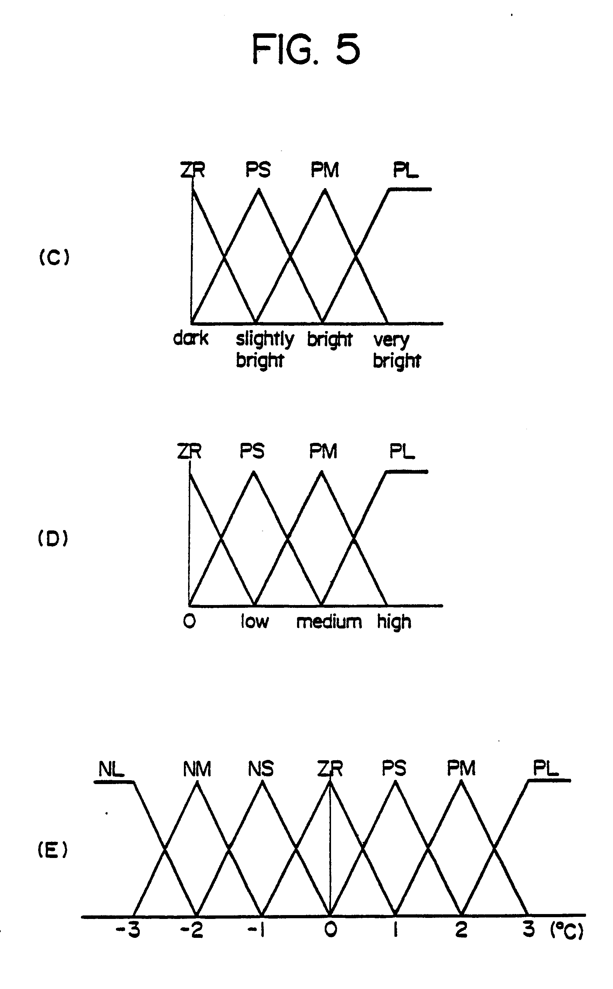

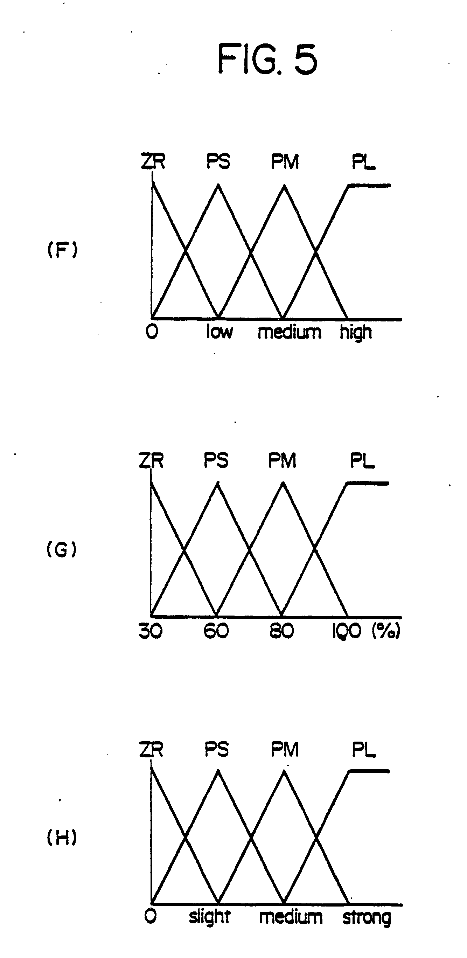

In the above fuzzy rules, each label represents a membership function. Additionally, the membership functions for each input variable x1, x2, x3, x4 and each output variable y1, y2, y3, y4 are depicted in graphs A-H respectively in **Fig. 5**, wherein each label can be defined as the following:

(A) For x1, with respect to temperature difference,
NL : outdoor temperature is much less than room temperature NM : outdoor temperature is less than room temperature
NS : outdoor temperature is slightly less than room temperature
ZR : outdoor temperature is the same as room temperature
PS : outdoor temperature is slightly more than room temperature
PM : outdoor temperature is more than room temperature
PL : outdoor temperature is much more than room temperature
(B) For x2, with respect to humidity difference,
NL : outdoor humidity is much less than room humidity
NM : outdoor humidity is less than room humidity
NS : outdoor humidity is slightly less than room humidity
ZR : outdoor humidity is the same as room humidity
PS : outdoor humidity is slightly more than room humidity
PM : outdoor humidity is more than room humidity
PL : outdoor humidity is much more than room humidity
(C) For x3, with respect to outdoor brightness,
ZR : dark
PS : slightly bright
PM : bright
PL : very bright
(D) For x4, with respect to permeation of light through air,
ZR : no permeation
PS : low permeation
PM : medium permeation
PL : high permeation
(E) For y1, with respect to air regulator **10** output,
NL : greatly reduce predetermined temperature
NM : reduce predetermined temperature

NS : slightly reduce predetermined temperature
ZR : maintain the same predetermined temperature
PS : slightly increase predetermined temperature
PM : increase predetermined temperature
PL : greatly increase predetermined temperature
(F) For y2, with respect to humidity regulator output,
ZR : maintain the same predetermined humidity
PS : slightly increase predetermined humidity
PM : increase predetermined humidity
PL : greatly increase predetermined humidity
(G) For y3, with respect to lighting apparatus **12** output, ZR : output 30% of full brightness
PS : output 60% of full brightness
PM : output 80% of full brightness
PL : output 100% of full brightness
(H) For y4, with respect to ventilation apparatus **13** output, ZR : no ventilation
PS : slight ventilation
PM : medium ventilation
PL : strong ventilation

Finally, for the sake of clarifying classic membership function terminology: NL = negative large, NM = negative medium, NS negative small, ZR = zero, PS = positive small, PM = positive medium, and PL = positive large.

Returning to **Fig. 2**, specific examples will now be given to further explain fuzzy reasoning. The variables and labels of the top fuzzy operating section **40** correspond to Rule 1 stated above. Thus, Rule 1 means that when the outdoor temperature is slightly greater than room temperature, the outdoor humidity nearly equals room humidity, it is very bright outdoors, and the air in the room is clean because the light permeation is high, then the air regulator **10** will slightly raise the predetermined temperature **A**, the humidity regulator **11** will maintain the same predetermined humidity **B**, the lighting apparatus **12** will operate at 100% brightness **C**, and the ventilation apparatus **13** will be idle **D**; wherein **A, B, C, and D** are the predetermined output values.

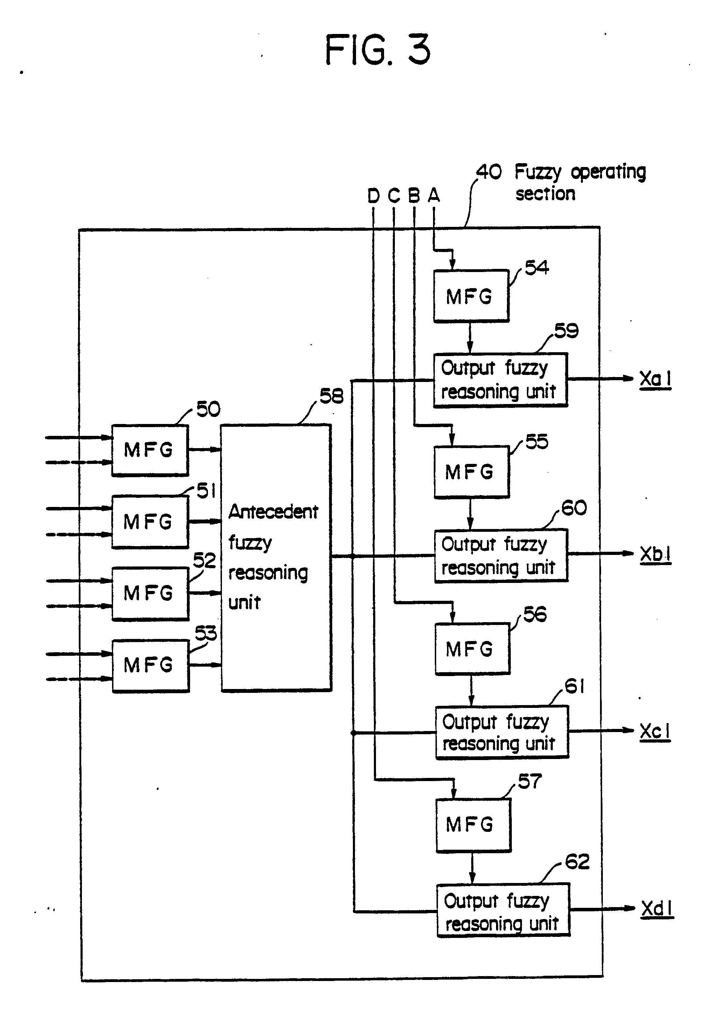

**Fig. 3** shows the fuzzy operating section **40** in detail. The fuzzy operating section **40** has 8 membership function generators **50 - 57** that generate membership functions according to input variables x1 - x4 and y1 - y4 respectively. Moreover, the label, or variable value, of each variable delineates which membership function corresponding to the label in **Fig. 5** (A-H) will be generated by each membership function generator **50 - 57**.

For example, variable x1 with a label of PS is input to the membership function generator **50** and the membership function corresponding to PS in **Fig. 5** (A) is generated. The generated membership function is then input to an antecedent fuzzy reasoning unit **58**. Similarly, variable x2 and its label, for example, ZR are input to the membership function generator **51** and the membership function corresponding to ZR in **Fig. 5** (B) is generated and, in turn, input to the antecedent fuzzy reasoning unit **5 8**. The same process applies for x3 and x4 and their labels, for example PL and PL, input to membership function generators **52** and **53** respectively, wherein the generated membership functions from **Fig. 5** (C and D) are input to the antecedent fuzzy reasoning unit **58**.

The membership functions input to the fuzzy reasoning unit **58** are determined by an expert's experience. Thus, the apparatus in effect "thinks" just as an expert would. Therefore, the antecedent fuzzy reasoning unit **58** compares the given value x with the given membership function for x. Since this calculation is the antecedent to the consequent, the fuzzy reasoning unit **58** compares the inputs by performing a mini rule as in **Fig. 6(C)**. This process is performed for each value x. The results are then input to output fuzzy reasoning units **59 - 62**. Then, the output fuzzy reasoning units **59 - 62** compare the data generated from the antecedent fuzzy reasoning unit **58** with membership functions generated from the **A, B, C, and D** data by the means of membership function generators **54 - 57**. The final outputs of the fuzzy operating section **40** are in the form of output membership functions Xa1-n, Xb1-n, Xc1-n and Xd1-n, wherein 1-n refers to the number [n] of times the process is performed. In this manner, the variables can always be updated and the room condition maintaining apparatus can continually adjust the room environment in response to the outdoor environment.

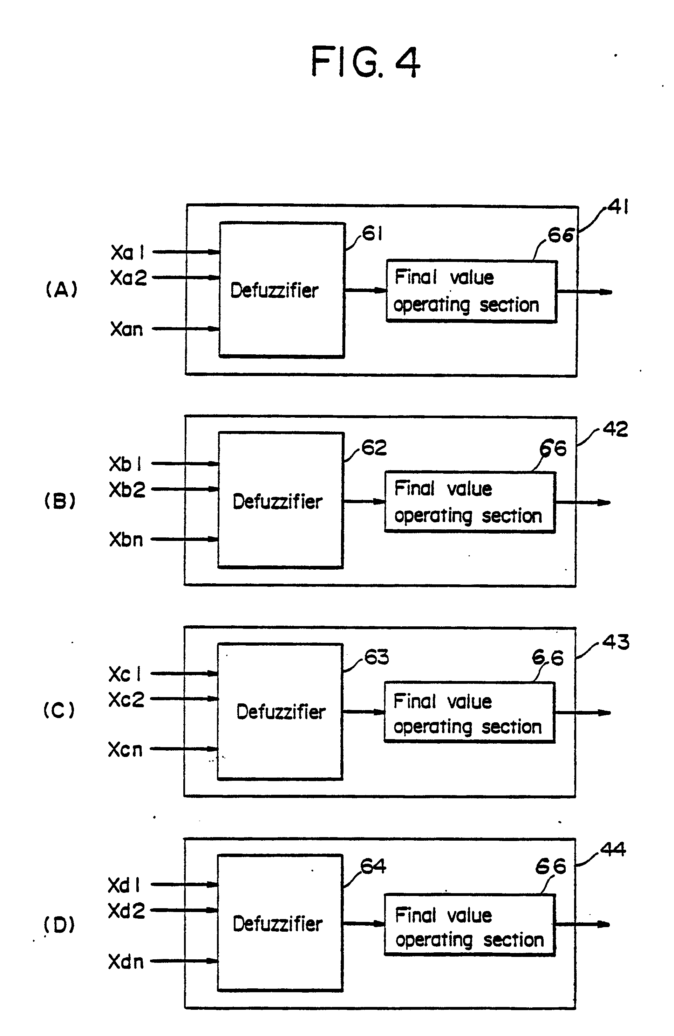

**Fig. 4** (A-D) shows how the fuzzy operating section's **40** outputs, Xa, Xb, Xc and Xd, are defuzzified in the defuzzifying sections **41, 42, 43 and 44**. Defuzzifying section **41** produces an output variable value of temperature by processing variable Xa in a defuzzifier **61** by performing a max operation and then taking the center of gravity of the output membership function in a final value operation section **65**. The final center of gravity produced by the defuzzifying section **41** determines how much the air regulator will vary its output **A**. For instance, in Rule 1, the air regulator would probably vary its output **A** to increase the room temperature by 1 or 2 degrees centigrade.

**Fig. 4(B)** depicts defuzzifying section **42**, showing how the humidity detector's output **B** is determined over time. The fuzzy operating section outputs Xb(1 - n) are continually input into defuzzifier **62**, which performs a max operation on a generated membership function and then inputs the center of gravity to a final value operating section **66**. The final value operating section then performs a calculation to determine a new output B of the humidity regulator.

.**Fig. 4(C)** shows the defuzzifying section **43** regarding the lighting apparatus **12** output C. Variable Xc is input to the defuzzifier **63** and a max operation is performed and thee result is input to the final value operation section **67** to determine the center of gravity. The final variable value is then output to the lighting apparatus **12** and determines what percent of illumination capacity the lighting apparatus **12** will output.

Similarly, **Fig. 4(D)** illustrates how the defuzzifier **64** in the defuzzifying section **44** performs a max operation on the input variable Xc and the final value operating section **68** produces the center of gravity regulating the ventilation apparatus **13**.

As can be seen by the above explanation, the device according to this invention can control a room environment by constantly monitoring conditions in the room and outdoor conditions. By adjusting room conditions in response to outdoor conditions, the room can be maintained at a maximum comfort level for anyone in the room. Especially advantageous is the fact that anyone entering or leaving the room will experience a smooth transition between the indoor and outdoor climates.

The above descriptions and accompanying drawings are merely illustrative of the applications of the principles of the present invention and are not limiting. Many other embodiments falling under the spirit and scope of this invention may be devised by those skilled in the art. Accordingly, this invention is only limited by the appended claims.

**Claims**

1. A room condition maintaining apparatus, comprising:
- a surroundings detecting means (1 to 6) for detecting at least two of the parameters, temperature, humidity, and lighting both inside a room and outdoors as well as preferably detecting air quality of the room; and
- a fuzzy controller (9) operating on the basis of fuzzy reasoning, wherein the fuzzy controller's input is the output from said surroundings detecting means (1 to 6) and the fuzzy controller's output controls devices corresponding to said parameters as an air regulating apparatus (10), a humidity regulator (11), a lighting apparatus (12), and/or a ventilation apparatus (13).

2. A room condition maintaining apparatus according to claim 1, wherein the surroundings detecting means further comprises a temperature difference detector (7) and a humidity difference detector (8) for detecting differences between the room and outdoor temperatures and humidities respectively.

3. A room condition maintaining apparatus according to claim 1 or 2, wherein the room conditions are controlled to approximate the outdoor conditions.

4. A room condition maintaining apparatus according to any of the claims 1 to 3, wherein the fuzzy controller (9) comprises a fuzzy operating section (40) and defuzzifying sections (41 to 44).

5. A room condition maintaining apparatus according to claim 4, wherein the fuzzy operating section (40) comprises membership function generators (50 to 57) and fuzzy reasoning units (58 to 62).

6. A room condition maintaining apparatus according to claim 4 or 5, wherein each defuzzifying section (41 to 44) comprises a defuzzifier (61 to 64) and a final value operating section (66).

7. A method for maintaining a room condition comprising the steps:

a) detecting surroundings condition parameters, as temperature, humidity and/or lighting both inside a room and outdoors and preferably the air quality of the room;

b) operating fuzzy reasoning on the detected surroundings condition parameters; and

c) controlling means for regulating said condition parameters in response to the results of the fuzzy reasoning operation.

8. The method of claim 7, further comprising the step of difference forming of indoor and outdoor condition parameters.

9. The method of claim 7 or 8, wherein the room conditions are controlled to approximate the outdoor conditions.

10. The method of any of claims 7 to 9, further comprising the step of defuzzifying the results of the fuzzy reasoning operation.

# FIG. I

# FIG. 2

# FIG. 3

# FIG. 4

(A)

Xa1 →
Xa2 →

Xan →

Defuzzifier  ⌐61

Final value
operating section  ⌐66

41

(B)

Xb1 →
Xb2 →

Xbn →

Defuzzifier  ⌐62

Final value
operating section  ⌐66

42

(C)

Xc1 →
Xc2 →

Xcn →

Defuzzifier  ⌐63

Final value
operating section  ⌐66

43

(D)

Xd1 →
Xd2 →

Xdn →

Defuzzifier  ⌐64

Final value
operating section  ⌐66

44

# FIG. 5

(A)

NL  NM  NS  ZR  PS  PM  PL

-15  -10  -5  0  5  10  15  (°C)

(B)

NL  NM  NS  ZR  PS  PM  PL

-60  -40  -20  0  20  40  60  (%)

# FIG. 5

(C)

```
ZR      PS      PM      PL

dark    slightly  bright  very
        bright           bright
```

(D)

```
ZR      PS      PM      PL

O       low    medium   high
```

(E)

```
NL    NM    NS    ZR    PS    PM    PL

-3    -2    -1     0     1     2     3  (°C)
```

# FIG. 5

(F)

ZR     PS     PM     PL

O     low     medium     high

(G)

ZR     PS     PM     PL

30     60     80     100 (%)

(H)

ZR     PS     PM     PL

O     slight     medium     strong

# FIG. 6

(A)

0.5

$X_1'$

membership function representing A

$X_1$

(B)

0.3

$X_2'$

membership function representing B

$X_2$

(C)

0.3

membership function representing Z

S

y

center of gravity y'

(D)

0.5

0.3

y

center of gravity y''